# FASCICULE DE BREVET EUROPEEN

(11) **EP 1 811 422 B1**
(45) Date de publication et mention de la délivrance du brevet: **31.08.2016**
(21) Numéro de dépôt: 06124846.4
(22) Date de dépôt: 27.11.2006
(51) Int. Cl.: G06F 21/32

(54) **Procédés de détermination d'un identifiant et de vérification biométrique et systèmes associés**
Verfahren zur Bestimmung eines Identifikators und zur biometrischen Verifizierung und zugehörige Systeme
Processes for determining an identifier, biometric verification and associated systems.

(30) Priorité: 23.01.2006 FR 0600580
(43) Date de publication de la demande: 25.07.2007
(73) Titulaire: Safran Identity & Security, 92130 Issy-les-Moulineaux (FR)
(72) Inventeur: Bringer, Julien, 75015, PARIS (FR); Welti, Paul, 75015, PARIS (FR)
(74) Mandataire: Cabinet Plasseraud

(56) Documents cités:
- WO-A-00/51244
- JUELS A ET AL: "A fuzzy commitment scheme" 6TH. ACM CONFERENCE ON COMPUTER AND COMMUNICATIONS SECURITY. SINGAPORE, NOV. 2 - 4, 1999, ACM CONFERENCE ON COMPUTER AND COMMUNICATIONS SECURITY, NEW YORK, NY : ACM, US, 2 novembre 1999 (1999-11-02), pages 28-36, XP002285060 ISBN: 1-58113-148-8
- PIM TUYLS ET AL: "Practical Biometric Authentication with Template Protection" LECTURES IN COMPUTER SCIENCE, vol. 3546, 2005, pages 436-446, XP019013299

## Description

La présente invention concerne l'utilisation de données biométriques.

Il est connu d'utiliser des données biométriques d'individus dans le cadre de multiples applications.

A titre d'exemple, la vérification de l'identité d'un individu peut se baser sur une comparaison d'une donnée biométrique mesurée sur un individu déclinant son identité avec une donnée biométrique préalablement obtenue en correspondance avec ladite identité.

Selon un autre exemple, on peut subordonner à une vérification biométrique la délivrance d'un droit, la délivrance d'un droit étant à comprendre dans son acception la plus large (délivrance d'un permis de conduire, d'un titre de transport, d'une indemnisation, autorisation d'accès à un local, etc.).

Le document de JUELS A ET AL: "A fuzzy commitment scheme", 6TH. ACM CONFERENCE ON COMPUTER AND COMMUNICATIONS SECURITY. SINGAPORE, NOV. 2 - 4, 1999, ACM CONFERENCE ON COMPUTER AND COMMUNICATIONS SECURITY, NEW YORK, NY : ACM, US, 2 novembre 1999 (1999-11-02), pages 28-36, ISBN: 1-58113-148-8 décrit une technique combinant les techniques des zones de codes de correction d'erreurs et la cryptographie pour donner un nouveau type de primitive cryptographique appelé logique de validation floue. A l'instar d'une logique de validation cryptographique classique, la logique de validation floue permet de masquer et de lier : il est impossible pour un pirate de parvenir à connaître la valeur validée, et pour la personne qui valide d'invalider une valeur à l'aide de plus d'un procédé. La logique est floue dans le sens où elle accepte un témoin proche du témoin du cryptage d'origine selon une métrique appropriée, mais pas nécessairement identique. Cette caractéristique de la logique de validation floue la rend particulièrement utile pour des applications telles que les systèmes d'authentification biométrique, dans lesquels les données sont soumises à un bruit aléatoire. Du fait que la logique tolère les erreurs, elle est capable de protéger les données biométriques au même titre que les techniques cryptographiques classiques, telles que les fonctions de hachage, utilisées pour protéger des mots de passe alphanumériques.

Un problème tient à la nature des données biométriques utilisées. Celles-ci peuvent en effet présenter un pouvoir discriminant très variable. Le pouvoir discriminant correspond à la faculté de caractériser de façon plus ou moins précise un individu.

Ainsi, une donnée biométrique telle que la forme générale d'une main ou la longueur de quelques doigts de la main est relativement peu discriminante, puisque deux individus quelconques ont une probabilité relativement élevée de présenter la même donnée. A l'inverse, une donnée biométrique telle que l'empreinte digitale des dix doigts des mains ou des caractéristiques de l'iris des yeux est relativement discriminante, si bien que deux individus quelconques ont une probabilité relativement faible de présenter la même donnée.

Certaines applications requièrent l'utilisation de données biométriques avec un fort pouvoir discriminant, car elles s'adressent exclusivement ou quasi exclusivement à des individus particuliers. On peut penser par exemple à une application visant à donner accès à un site stratégique à un personnel spécialisé.

Au contraire, pour d'autres applications dont l'enjeu est moindre, l'utilisation de données biométriques avec un faible pouvoir discriminant peut être préférée, recommandée voire rendue obligatoire.

En effet, un inconvénient des données biométriques très discriminantes est qu'elles sont susceptibles de représenter une entrave à la protection de la vie privée ("privacy"), puisqu'elles peuvent permettre de caractériser complètement un individu. Ainsi, il n'est pas exclu qu'une application mettant en oeuvre des données biométriques très discriminantes puisse être détournée pour retrouver des données relatives à ses utilisateurs (notamment personnelles, par exemple l'identité) en dehors du contexte normal d'utilisation.

Cet inconvénient peut pousser certains individus souhaitant rester dans l'anonymat à ne pas utiliser des applications mettant en oeuvre des données biométriques jugées trop discriminantes.

En outre, dans certains pays, la législation est telle qu'une application donnée peut être refusée si elle utilise des données biométriques très discriminantes, tandis qu'elle serait acceptée si elle utilisait des données biométriques avec un pouvoir discriminant inférieur. Typiquement, il peut être requis que le niveau de discrimination mis en oeuvre soit proportionnel à l'enjeu de sécurité de l'application visée.

Le fait que des applications nécessitent d'utiliser des données biométriques de pouvoirs discriminants différents nécessite d'adapter les moyens d'obtention et de traitement des données biométriques à chaque application, ce qui est fastidieux et implique un coût de mise en oeuvre relativement élevé.

Un but de la présente invention est de limiter ces inconvénients.

L'invention propose ainsi un procédé de vérification biométrique selon la revendication 1.

Une telle vérification biométrique est réalisée en utilisant un identifiant ayant un pouvoir discriminant conforme aux attentes. Elle se base en outre sur une donnée biométrique initiale, qui peut être obtenue par exemple à l'aide de moyens d'acquisition classiques, quel que soit le niveau de discrimination souhaité.

Dans l'invention, une pluralité d'identifiants de pouvoirs discriminants déterminés distincts est stockée pour un individu donné. On choisira alors l'identifiant de la pluralité ayant le pouvoir discriminant le plus en adéquation avec le niveau de discrimination souhaité pour l'application à mettre en oeuvre.

Ainsi, à partir d'une même mesure biométrique, des vérifications de niveaux de discrimination différents pourront être mises en oeuvre selon les besoins. Cela implique une économie appréciable dans les moyens à déployer (capteurs biométriques par exemple) et une grande simplicité de mise en oeuvre.

L'invention propose aussi un système comprenant des moyens pour obtenir une donnée biométrique et des moyens de traitement numérique agencés pour mettre en oeuvre le procédé susmentionné de vérification biométrique.

L'invention propose aussi un produit programme d'ordinateur comprenant des instructions de code adaptées à la mise en oeuvre du procédé susmentionné de vérification biométrique, lorsqu'il est chargé et exécuté par des moyens informatiques.

D'autres particularités et avantages de la présente invention apparaîtront dans la description ci-après d'exemples de réalisation non limitatifs, en référence aux dessins annexés, dans lesquels :
- la figure 1 est un schéma représentant des étapes d'une phase d'enrôlement permettant la détermination d'un identifiant selon l'invention ;
- la figure 2 est un schéma représentant des étapes de vérification biométrique selon l'invention ;
- la figure 3 est un schéma représentant des étapes supplémentaires de vérification biométrique selon un mode de réalisation de l'invention ;
- les figures 4 à 7 sont des exemples simplifiés de chaînes numériques utilisées dans le cadre de vérifications biométriques selon les principes de l'invention.

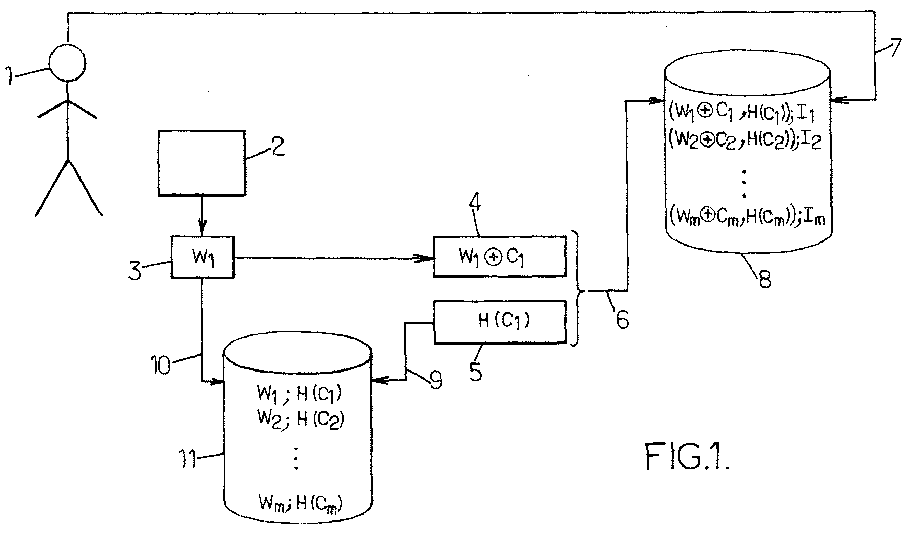

La figure 1 montre un individu 1 pour lequel on souhaite déterminer un identifiant de pouvoir discriminant déterminé, au cours d'une phase dite d'enrôlement. Ce pouvoir discriminant peut par exemple être choisi pour être conforme à un niveau de discrimination requis par une application mettant en oeuvre une vérification biométrique. L'identifiant ainsi déterminé pourra alors être exploité dans la vérification biométrique, en apportant la garantie que les exigences de l'application en termes de discrimination seront respectées.

La détermination de l'identifiant est réalisée comme suit.

Une donnée biométrique est d'abord obtenue pour l'individu 1. Cette donnée biométrique peut être de différents types. De préférence, elle présentera un pouvoir discriminant relativement élevé. Le pouvoir discriminant est parfois caractérisé par un taux de "fausses acceptances" qui correspond à la probabilité de confondre deux personnes quelconques lors de l'analyse de leurs données biométriques. La donnée biométrique obtenue dans le cas présent sera donc avantageusement choisie pour présenter un taux de fausses acceptances inférieur à un seuil prédéterminé, par exemple 10⁻⁶. Il peut ainsi s'agir d'empreintes digitales ou de caractéristiques de l'iris de l'oeil par exemple.

L'obtention de la donnée biométrique est avantageusement réalisée par acquisition à l'aide d'un capteur 2. Ce capteur est adapté à la donnée biométrique qu'on souhaite obtenir. Ainsi, il peut par exemple s'agir d'un capteur classique d'empreintes digitales ou de caractéristiques de l'iris.

Une fois obtenue, la donnée biométrique de l'individu 1 est convertie en une chaîne numérique, comme cela est connu en soi. La chaîne numérique w₁ ainsi obtenue (étape 3) est par exemple une chaîne d'éléments binaires.

L'obtention de la chaîne w₁, lorsque la donnée biométrique comprend des empreintes digitales, peut comprendre une pré-orientation des images d'empreintes selon une direction, et une extraction de certaines caractéristiques (par exemple minuties ou directions des sillons). Lorsque la donnée biométrique est relative à l'iris, un code d'iris peut être extrait. Ces méthodes, connues en soi, peuvent dépendre d'un type de correction d'erreurs utilisé (l'application d'une telle correction d'erreurs est décrit ci-après). Certaines méthodes sont décrites dans les articles mentionnés ci-dessous. Bien sûr, d'autres méthodes sont également possibles.

Par ailleurs, un mot d'un code correcteur d'erreurs c₁, qui peut être choisi de façon aléatoire parmi les différents mots du code, est associé à l'individu 1. Ce mot est une chaîne numérique, par exemple une chaîne binaire, présentant de préférence une taille identique à celle de la chaîne binaire w₁.

A cet effet, divers codes correcteurs d'erreurs peuvent être utilisés. A titre d'exemples non limitatifs, on peut citer le code BCH de longueur 511 décrit par P. Tuyls, A. Akkermans, T. Kevenaar, G.-J. Schrijen, A. Bazen et R. Veldhuis, dans l'article "Practical Biometric Authentication with Template Protection", AVBPA 2005, LNCS 3546, 2005, publié en 2005, ou bien le code concaténé Hadamard/Reed-Solomon décrit par R. Anderson, J. Daugman & F. Hao, dans l'article "Combining cryptography with biometrics effectively", Technical report UCAM-CL-TR-640, University of Cambridge, publié en juillet 2005. Bien sûr, d'autres codes correcteurs d'erreurs pourraient être utilisés.

Une fois associé à l'individu 1, le mot du code correcteur d'erreurs c₁ est ajouté à la chaîne binaire w₁ (étape 4). Comme cela est classique en traitement numérique, on entend par "ajout", l'opération de OU exclusif (⊕), de sorte que l'ajout des deux chaînes binaires soit tel que deux éléments binaires identiques de même rang appartenant aux deux chaînes respectivement donnent lieu à un "0", tandis que deux éléments binaires distincts de même rang appartenant aux deux chaînes respectivement donnent lieu à un "1". On obtient ainsi une nouvelle chaîne binaire w₁⊕c₁.

On calcule en outre un identifiant H(c₁) à partir du mot de code c₁, la fonction H étant une fonction de hachage (étape 5). On rappelle qu'une fonction de hachage est une fonction de compression permettant d'obtenir une information plus courte qu'une information initiale à laquelle elle est appliquée. Elle a en outre comme propriété de délivrer des résultats très différents à partir d'informations initiales qui diffèrent même légèrement, c'est-à-dire qu'elles accentuent les différences entre des informations distinctes, de façon à éviter qu'on puisse retrouver facilement l'information initiale à partir du résultat du hachage.

Dans le cadre de l'invention, la fonction de hachage H est choisie de façon telle que l'identifiant H(c₁) résultant ait un pouvoir discriminant déterminé. Autrement dit, la fonction de hachage choisie implique une probabilité de collision, i.e. une probabilité d'aboutir à un même condensé à partir de chaînes distinctes, correspondant au taux de fausses acceptances présenté par l'identifiant H(c₁).

Avantageusement, la fonction de hachage est choisie pour avoir un espace d'arrivée équiprobable comprenant un nombre de valeurs possibles correspondant sensiblement au pouvoir discriminant déterminé de l'identifiant.

A titre d'exemple non limitatif, on peut utiliser une fonction de hachage H dérivée de la fonction SHA-1 décrite dans le standard FIPS 180-1, "Secure hash standard", publié en avril 1993 par l'organisme Federal Information Processing Standards, et qui produit des condensés de 160 éléments binaires. Bien d'autres fonctions de hachage sont bien sûr également utilisables.

Ainsi, si l'on souhaite que l'identifiant à déterminer puisse prendre une valeur parmi un nombre de valeurs possibles égal à 2ⁿ, avec n<160, on peut alors choisir une fonction de hachage H telle que pour toute chaîne binaire x de longueur l, on ait H(x)=[SHA-1(X)]_{i1,...,in}, où [X]_{i1,...,in} désigne les éléments binaires de rang i₁,...,iₙ de la chaîne binaire x. Ainsi, H(c₁)=[SHA-1(c₁)]_{i1,...,in}, c'est-à-dire que l'identifiant déterminé est une chaîne de n éléments binaires correspondant aux éléments binaires de rang i₁,...,iₙ de la chaîne binaire résultant de l'application de la fonction SHA-1 au mot de code c₁. Dans cet exemple, H(c₁) a donc un pouvoir discriminant de 2ⁿ. En effet, du fait des propriétés de la fonction H, un individu quelconque a une chance sur 2ⁿ d'avoir le même identifiant H(c₁) que l'individu 1, et ce, même si un autre mot de code c₂ a été associé à cet individu.

Dans l'exemple susmentionné, on pourra donc définir le pouvoir discriminant de l'identifiant à déterminer par simple fixation du nombre n. Si l'on souhaite pouvoir effectuer une vérification biométrique de façon peu discriminante, on choisira n relativement faible (par exemple inférieur à 20). A l'inverse, si l'on souhaite pouvoir effectuer une vérification biométrique de façon discriminante, on choisira n relativement élevé (par exemple supérieur à 20).

De façon avantageuse, les informations obtenues relativement à l'individu 1, à savoir w₁⊕c₁ et H(c₁), sont ensuite stockées de façon associée sur un support de données (étape 6). Elles sont en outre associées à une identité I₁ de l'individu 1. Cette identité, qui peut par exemple consister en le nom et le prénom de l'individu 1, mais éventuellement d'autres types d'informations, peut être déclinée par l'individu 1 lui-même (étape 7) ou bien être obtenue par d'autres moyens. Elle est avantageusement vérifiée avant d'être stockée sur le support de données.

Dans l'exemple illustré sur la figure 1, toutes ces informations sont mémorisées dans une base de données d'identités 8 destinée à stocker les informations d'un ensemble d'individus 1-m. Selon une variante, les informations w₁⊕c₁, H(c₁) et I₁ pourraient être stockées en association sur un jeton biométrique détenu avantageusement par l'individu 1. D'autres supports de données sont également envisageables, dans la mesure où ils peuvent ensuite être interrogés dans le cadre d'une vérification biométrique.

On notera que, dans la base de données 8, la chaîne binaire w₁ caractérisant l'individu 1 n'est pas stockée en tant que telle, mais seulement sous la forme w₁⊕c₁. Ainsi, une personne ayant accès à cette base de données ne pourra pas trouver un lien entre l'identité I₁ et la chaîne binaire w₁ de l'individu 1. Si cette personne connaît l'identité I₁, elle sera incapable d'en déduire la chaîne binaire w₁, à partir de la base de données 8. De même, si cette personne connaît la chaîne binaire w₁, elle sera incapable d'en déduire l'identité I₁, à partir de la base de données 8.

De façon avantageuse, la chaîne binaire w₁ de l'individu 1 et l'identifiant obtenu H(c₁) sont en outre stockés l'un avec l'autre, sur un deuxième support de données qui peut aussi être une base de données 11 ou tout autre support envisageable (étapes 9 et 10). La base de données biométriques 11 ne comprend pas d'informations d'identités, telles que l'identité I₁ de l'individu 1, si bien qu'elle garantit la protection de la vie privée.

On notera que tout ou partie des opérations décrites ci-dessus peuvent être mises en oeuvre par un système utilisant avantageusement un programme d'ordinateur. Ce système peut consister en un simple dispositif, qui comprend alors le capteur 2 et les moyens de traitement numérique nécessaires au traitement des chaînes binaires, ou bien être distribué entre différents dispositifs aptes à communiquer entre eux de toute manière envisageable.

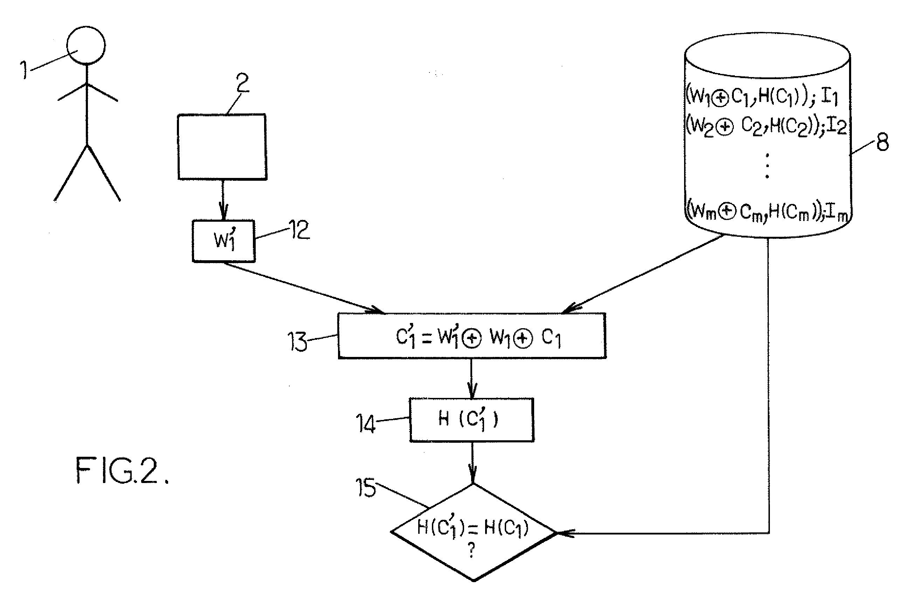

On s'intéresse ci-après, en référence à la figure 2, à une vérification biométrique effectuée à l'aide d'un identifiant de pouvoir discriminant déterminé tel que décrit plus haut. Cette vérification biométrique peut être mise en oeuvre dans le cadre d'une application quelconque. Elle peut par exemple être le prélude à la délivrance d'un droit, comme définie en introduction. L'application visée requiert un niveau de discrimination donné, en référence auquel le pouvoir discriminant de l'identifiant décrit plus haut a pu être déterminé.

Sur l'exemple de la figure 2, l'individu 1, qui a subi préalablement une phase d'enrôlement décrite en référence à la figure 1, fait désormais l'objet d'une vérification biométrique. A cet effet, une donnée biométrique de l'individu 1 est obtenue. La donnée biométrique en question est du même type que celle obtenue lors de l'enrôlement. Elle peut avantageusement être obtenue avec un capteur qui peut être le même ou du même type que le capteur 2 de la figure 1.

La donnée biométrique obtenue est ensuite convertie en une chaîne numérique, dans les mêmes conditions que lors de l'enrôlement (étape 12). Dans l'exemple décrit, on obtient ainsi une chaîne binaire w'₁, qui peut différer plus ou moins de la chaîne binaire w₁. Ces différences sont liées à la non reproductibilité des mesures biométriques réalisées à l'aide du capteur 2. A titre d'exemple, deux mesures successives d'empreinte digitale peuvent différer du fait de la variation de l'inclinaison du doigt ou de la pression exercée par le doigt sur le capteur entre les deux mesures.

Par la suite, on calcule une nouvelle chaîne binaire par ajout de w'₁ avec la chaîne w₁⊕c₁ préalablement stockée dans la base de données 8 ou tout support de données équivalent (étape 13). La chaîne w₁⊕c₁ correspondant à l'individu 1 est retrouvée dans la base de données 8, par exemple à l'aide de l'identité I₁ déclinée par l'individu 1.

Le résultat de ce nouvel ajout, à savoir w'₁⊕w₁⊕c₁, peut consister en un mot c'₁ du code correcteur d'erreurs auquel le mot c₁ appartient. Dans le cas contraire, on utilise avantageusement l'algorithme de décodage associé audit code correcteur d'erreurs, de manière à retrouver le mot c'₁ du code correcteur d'erreurs le plus proche de w'₁⊕w₁⊕c₁. Le succès de cette opération tient au fait que le code correcteur d'erreurs est prévu pour corriger un certain nombre d'erreurs dans les chaînes binaires, les différences entre w'₁ et w₁ étant alors vues comme des erreurs.

La fonction de hachage H telle qu'utilisée dans la phase d'enrôlement décrite plus haut est ensuite appliquée au nouveau mot de code c'₁ (étape 14). Le condensé H(c'₁) en résultant est alors comparé à l'identifiant H(c₁) stocké dans la base de données 8 pour l'individu 1 (étape 15). L'identifiant H(c₁) est retrouvé dans la base de données 8, par exemple à l'aide de l'identité I₁ déclinée par l'individu 1.

En cas d'égalité entre H(c'₁) et H(c₁), la vérification biométrique peut être considérée comme réussie, c'est-à-dire qu'on considère que l'individu 1 faisant l'objet de la vérification est bien celui qui avait fait préalablement l'objet de l'enrôlement décrit en référence à la figure 1. On peut ainsi réaliser une authentification à partir de l'identité I₁ déclinée par l'individu 1.

En effet, les éventuelles différences entre les chaînes w₁ et w'₁, sous réserve de ne pas être excessives sont estompées grâce aux propriétés du code correcteur d'erreurs. De cette façon, dans le cas décrit en référence à la figure 2, on peut espérer obtenir un mot de code c'₁ égal à c₁. En conséquence, H(c'₁)=H(c₁), et l'authentification de l'individu 1 est réussie.

A l'inverse, si l'individu faisant l'objet de la vérification biométrique prétend, à tort, avoir l'identité I₁, il y a de fortes chances pour que le mot de code c'₁ obtenu pour cet individu selon les principes décrits plus haut soit différent de c₁. Dans ce cas, H(c'₁) peut différer de H(c₁), et l'authentification échoue. Mais, étant données les propriétés de la fonction H, il est malgré tout possible que H(c'₁)=H(c₁), alors même que c'₁ diffère de c₁. Dans ce dernier cas, l'authentification est considérée, à tort, comme réussie. L'individu ayant usurpé l'identité I₁ pourra alors éventuellement se faire passer pour l'individu 1. Il s'agit donc d'un cas de fausse acceptance que l'application visée est prévue pour tolérer.

Cette incertitude est liée au relativement faible pouvoir discriminant de l'identifiant H(c₁). En contrepartie, ce faible niveau de discrimination empêche toute personne ayant accès à la base de données 8 de retrouver l'identité I₁ de l'individu 1, à partir de son identifiant H(c₁), puisque plusieurs individus peuvent avoir le même identifiant H(c₁). La protection de la vie privée de l'individu 1 est ainsi assurée.

On comprendra qu'une vérification biométrique a pu ainsi être réalisée avec un faible niveau de discrimination pour protéger la vie privée de l'individu 1, à partir d'une donnée biométrique pourtant relativement discriminante.

A la suite de la vérification réalisée à l'étape 15, d'autres étapes peuvent éventuellement être mises en oeuvre selon l'application visée. Par exemple, la délivrance d'un droit pourra être faite à l'individu 1 dans ce cas.

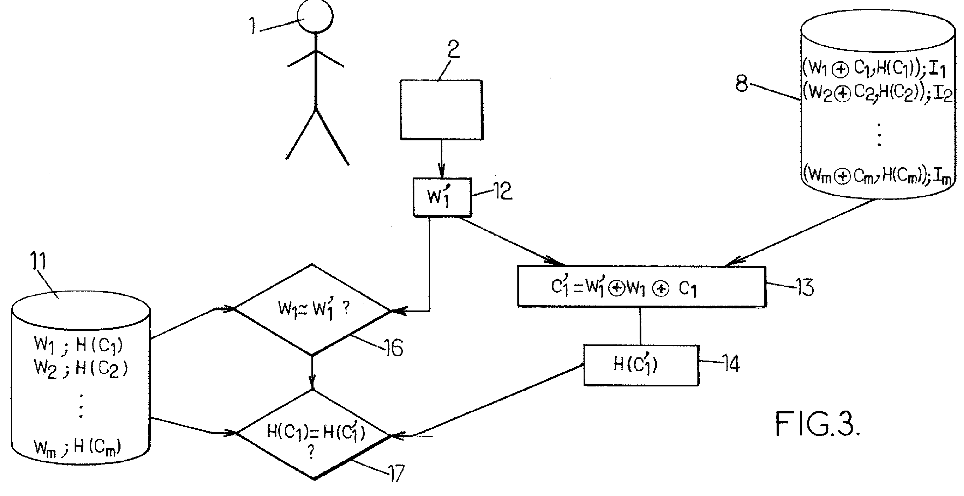

La figure 3 montre un exemple de vérification biométrique incluant des étapes de vérification supplémentaires par rapport à l'exemple de la figure 2. Les étapes 12-14 sont identiques à celles de la figure 2.

En outre, après obtention de la chaîne binaire w'₁ relative à l'individu 1, on retrouve dans la base de données biométriques 11 ou tout autre support de données équivalent, la chaîne binaire w₁ correspondante, c'est-à-dire celle qui présente le plus de similitudes avec w'₁ et qui est donc susceptible de caractériser le même individu 1 (étape 16).

On retrouve ensuite l'identifiant H(c₁) préalablement stocké dans la base de données biométriques 11 en association avec w₁, lors de la phase d'enrôlement.

Puis, on compare H(c'₁) avec l'identifiant H(c₁) (étape 17). En cas d'égalité, on peut alors conclure que l'individu 1 a déjà fait l'objet d'un enregistrement biométrique dans la base de données 11 lors d'un enrôlement préalable.

Cette vérification peut être utile par exemple pour éviter que l'individu 1 puisse faire l'objet de plusieurs enrôlements successifs qui pourraient éventuellement lui permettre de se faire délivrer plus d'une fois un même droit (par exemple plusieurs permis de conduire avec des identités différentes, etc.).

Là encore, le relativement faible pouvoir discriminant de l'identifiant H(c₁) empêche toute personne ayant accès à la base de données 11 de retrouver la chaîne binaire w₁ caractérisant l'individu 1, à partir de cet identifiant H(c₁), puisque plusieurs individus peuvent avoir le même identifiant H(c₁). La protection de la vie privée de l'individu 1 est ainsi assurée.

On notera que tout ou partie des opérations décrites en référence aux figures 2 et 3 peuvent être mises en oeuvre par un système utilisant avantageusement un programme d'ordinateur. Ce système peut consister en un simple dispositif, qui comprend alors le capteur 2 et les moyens de traitement numérique nécessaires au traitement des chaînes binaires, ou bien être distribué entre différents dispositifs aptes à communiquer entre eux de toute manière envisageable. Ce système peut être le même que celui décrit en référence à la figure 1 et utilisé pour l'enrôlement. Les deux systèmes peuvent également être distincts.

Dans un mode de réalisation de l'invention, plusieurs identifiants ayant des pouvoirs discriminants distincts sont déterminés pour l'individu 1. Ainsi, t identifiants H₁(c₁), H₂(c₁),...,Hₜ(c₁) ayant des pouvoirs discriminants décroissants peuvent être obtenus et stockés relativement à l'individu 1 selon les principes décrits en référence à la figure 1.

En fonction de l'application qu'on souhaite mettre en oeuvre, une vérification biométrique est réalisée, comme décrit en référence à la figure 2 ou 3, en utilisant l'identifiant dont le pouvoir discriminant correspond au niveau de discrimination requis pour ladite application. Ainsi, une application nécessitant une forte discrimination pourra nécessiter une vérification biométrique utilisant l'identifiant H₁(c₁), tandis qu'une application nécessitant une faible discrimination pourra nécessiter une vérification biométrique utilisant l'identifiant Hₜ(c₁) par exemple.

Le niveau de discrimination souhaité peut faire l'objet d'une détermination préalable, voire d'une négociation avec l'individu concerné.

Dans ce cas de figure, on comprendra que des vérifications biométriques avec des niveaux de discrimination différents peuvent être réalisées à partir d'une seule et unique donnée biométrique et donc à l'aide d'un seul capteur, de façon transparente pour l'individu qui la subit. La protection de la vie privée de l'individu est cependant garantie dans tous les cas où cela est nécessaire, même si une donnée biométrique relativement discriminante est initialement acquise pour ledit individu.

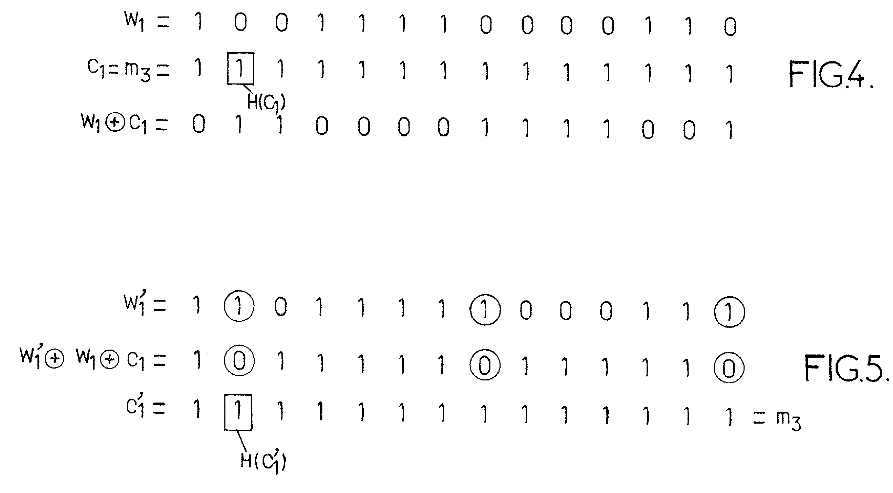

Les figures 4 à 7 montrent des exemples numériques simplifiés permettant de mieux comprendre encore le fonctionnement de l'invention décrite ci-dessus.

Sur la figure 4, on a représenté une chaîne binaire w₁ supposée caractériser un individu 1. Dans l'exemple illustré, pour des raisons de clarté et de simplification, la chaîne binaire w₁ ne comporte que 14 éléments binaires, ce qui est relativement peu discriminant (2¹⁴=16384 valeurs possibles au total). Dans la réalité, une telle chaîne binaire pourrait comprendre avantageusement un nombre plus élevé d'éléments binaires, par exemple 20 éléments binaires ou plus.

Par ailleurs, le code correcteur d'erreurs C utilisé est constitué de quatre mots distincts, à savoir m₁=11111110000000, m₂=00000001111111, m₃=11111111111111 et m₄=00000000000000. Etant donné le format de ces quatre mots, on comprendra que le code correcteur d'erreurs C est capable de corriger trois erreurs sans ambiguïté. En effet, une chaîne binaire présentant trois différences avec un de ces quatre mots, par exemple m₁, comprendra un plus grand nombre de différences encore avec les trois autres mots, si bien qu'elle pourra être assimilée à m₁ sans hésitation. Bien sûr, le code C choisi pour cet exemple est un cas simplifié. Dans la pratique, des codes correcteurs d'erreurs plus complexes, comme ceux cités plus haut, pourront avantageusement être utilisés.

Lors de l'enrôlement de l'individu 1, un mot du code C, à savoir m₃, est associé à cet individu 1, de façon éventuellement arbitraire. Avec les notations adoptées plus haut, on a donc c₁=m₃. Puis, on détermine la chaîne binaire w₁⊕c₁, c'est-à-dire w₁⊕m₃, comme illustré sur la figure 4.

De plus, une fonction de hachage est appliquée au code c₁=m₃. Dans l'exemple décrit, la fonction de hachage H utilisée consiste à sélectionner le deuxième élément binaire d'une chaîne binaire, en partant de la gauche. Ainsi, H(c₁) est égal à 1, comme montré sur la figure 4 par un encadrement de l'élément binaire sélectionné. Bien sûr, une telle fonction de hachage est particulièrement simple, pour des raisons de clarté. En pratique, des fonctions de hachage plus complexes, comme celles mentionnées plus haut, pourront être utilisées.

A l'issue de l'enrôlement de l'individu 1, on dispose donc des deux informations suivantes : w₁⊕c₁=01100001111001 et H(c₁)=1. Ces informations sont avantageusement stockées sur un support de données pour pouvoir être retrouvées dans une phase de vérification ultérieure.

La figure 5 illustre un cas de vérification biométrique relativement à l'individu 1. Une nouvelle chaîne binaire w'₁ est obtenue pour l'individu 1, à partir d'une nouvelle mesure biométrique par exemple. Cette chaîne binaire w'₁ comporte trois différences avec la chaîne binaire w₁. Les éléments binaires qui diffèrent ont été entourés dans la chaîne binaire w'₁ de la figure 5.

Puis, conformément aux principes décrits plus haut, on calcule la chaîne binaire w'₁⊕w₁⊕c₁, puis on cherche à déterminer le mot c'₁ du code C dont cette chaîne est la plus proche. On constate que la chaîne w'₁⊕w₁⊕c₁ comprend trois différences avec le mot m₃. La correction d'erreurs permet alors d'assimiler cette chaîne w'₁⊕iw₁⊕c₁ au mot de code m₃. Selon les notations précédemment adoptées, on a donc c'ᵢ=m₃.

De ce fait, le calcul de H(c'₁) permet de retrouver H(m₃) c'est-à-dire la valeur binaire 1, comme indiqué par l'encadrement du deuxième élément binaire du mot c'₁ sur la figure 5.

Puisque H(c'₁)=H(c₁)=1, la vérification biométrique est valide. L'individu 1 est authentifié avec succès. Il pourra ensuite bénéficier éventuellement de la délivrance d'un droit par exemple.

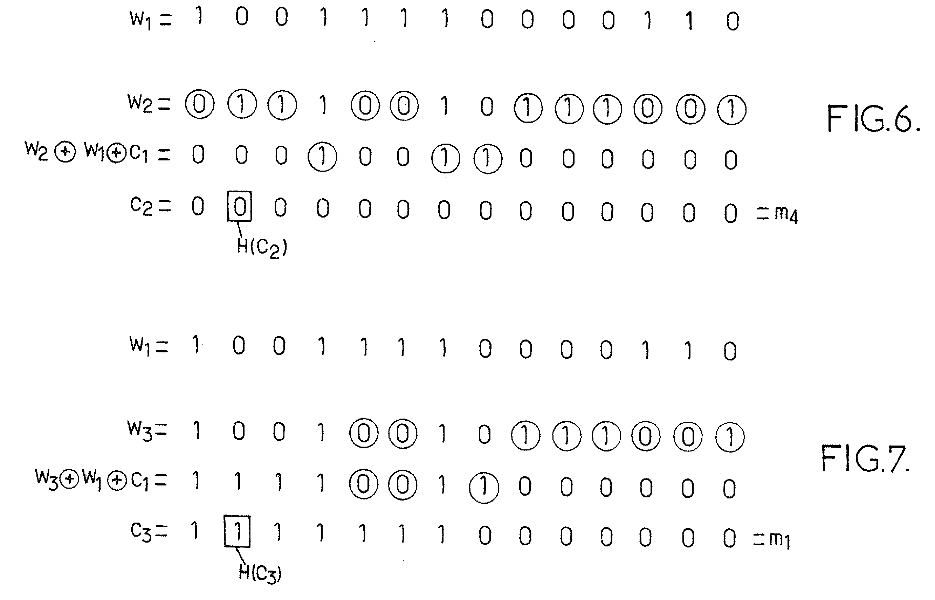

La figure 6 illustre un cas de vérification biométrique relativement à un individu 2 essayant de se faire passer pour l'individu 1.

Une chaîne binaire w₂ caractérisant l'individu 2 est obtenue, à partir d'une mesure biométrique par exemple. Cette chaîne w₂ diffère largement de la chaîne w₁ relative à l'individu 1. Onze éléments binaires (entourés sur la figure 6) sont en effet différents entre ces deux chaînes.

Lors de la vérification biométrique, on calcule la chaîne w₂⊕w₁⊕c₁, puis on détermine le mot c₂ du code C le plus proche de cette chaîne, à l'aide des propriétés de décodage d'erreurs du code. Dans le présent exemple, la chaîne w₂⊕w₁⊕c₁ présente trois différences avec le mot m₄ (éléments binaires entourés), si bien qu'on conclut que c₂=m₄.

Le deuxième élément binaire de c₂ (encadré sur la figure 6) étant un 0, on a donc H(c₂)=0. H(c₂) diffère donc de H(c₁), de sorte que la vérification est un échec. L'individu 2 n'a donc pas pu se faire passer pour l'individu 1.

Dans l'exemple de la figure 7, un individu 3 caractérisé par une chaîne binaire w₃ tente de se faire passer pour l'individu 1. Il y parvient puisque la chaîne binaire w₃⊕w₁⊕c₁ est assimilée au mot de code c₃=m₁ et que H(c₃)=H(m₁)=H(m₃)=H(c₁)=1, comme cela apparaît sur la figure 3.

Cet exemple correspond à un cas de fausse acceptance, toléré par l'application visée. Cette fausse acceptance est due au faible pouvoir discriminant de l'identifiant H(c₁) qui ne peut prendre que deux valeurs 0 ou 1. Ainsi, quelle que soit la chaîne binaire w₁ relative à un individu i, on a une chance sur deux pour que H(cᵢ)=H(c₁).

Ce niveau d'incertitude est acceptable pour l'application visée. Il permet en outre de ne pas pouvoir retrouver l'identité Iᵢ d'un individu i à partir de son identifiant H(cᵢ), même pour une personne ayant accès à la structure de données stockant Iᵢ et H(cᵢ) en association.

La présente invention peut également être utilisée dans des applications d'identification, c'est-à-dire pour retrouver l'identité d'un individu à partir de sa biométrie.

Ainsi, si l'on se réfère à nouveau à la figure 2, on cherche désormais à obtenir l'identité de l'individu 1. Les étapes 12 à 14 sont mises en oeuvre comme décrit plus haut, si ce n'est que la chaîne w'₁ est ajoutée à toutes les chaînes w₁⊕c₁, w₂⊕c₂,..., wₘ⊕cₘ stockées dans la base de données 8 relativement à des individus distincts, ou à au moins une pluralité d'entre ces chaînes.

On vérifie ensuite, pour chaque condensé H(c'₁), H(c'₂),..., H(c'ₘ) obtenu, si celui-ci correspond à l'identifiant H(c₁), H(c₂),..., H(cₘ) correspondant, stocké dans la base de données 8.

Lorsqu'une égalité est détectée, on peut en déduire une identité de l'individu considéré. Par exemple si H(c'₁)=H(c₁), on peut alors conclure que l'individu 1 possède l'identité I₁ stockée en association avec H(c₁).

On notera cependant que la détermination univoque de l'identité ne sera a priori possible que pour des tailles de bases inférieures à une certaine limite déterminée par le pouvoir discriminant. En général, plusieurs identités peuvent correspondre.

## Revendications

1. Procédé de vérification biométrique utilisant un premier support de données (8) stockant de façon associée, pour au moins un individu (1) d'un ensemble d'individus, une identité (I₁) relative audit individu, le résultat (w₁⊕c₁) d'un ajout, par l'opération de OU exclusif, d'un premier mot (C₁) d'un code correcteur d'erreurs associé audit individu à une première chaîne numérique (w₁) obtenue à partir d'une donnée biométrique relative audit individu et au moins deux identifiants de pouvoirs discriminants déterminés distincts obtenus par application de fonctions de hachage respectives au premier mot du code correcteur d'erreurs, le procédé comprenant les étapes suivantes relativement à un individu (1) de l'ensemble d'individus :
- obtenir une donnée biométrique relative à l'individu ;
- convertir la donnée biométrique en une deuxième chaîne numérique (w'₁) ;
- déterminer un deuxième mot (c'₁) du code correcteur d'erreurs correspondant sensiblement à l'ajout, par l'opération de OU exclusif, à la deuxième chaîne numérique (w'₁) du résultat (w₁⊕c₁) de l'ajout, par l'opération de OU exclusif, du premier mot du code correcteur d'erreurs à la première chaîne numérique stocké sur le premier support de données (8) en association avec l'identité (I₁) relative audit individu ;
- déterminer un niveau de discrimination souhaité ;
- déterminer l'identifiant (H(c₁)) stocké sur le premier support de données en association avec l'identité relative audit individu, ayant un pouvoir discriminant correspondant sensiblement au niveau de discrimination souhaité ;
- appliquer au deuxième mot (c'₁) du code correcteur d'erreurs la fonction de hachage par application de laquelle ledit identifiant déterminé a été obtenu ; et
- comparer le résultat (H(c'₁)) de l'application de ladite fonction de hachage au deuxième mot du code correcteur d'erreurs avec l'identifiant déterminé (H(c₁)).

2. Procédé selon la revendication 1, dans lequel certaines au moins des fonctions de hachage appliquées au premier mot du code correcteur d'erreurs sont choisies pour avoir un espace d'arrivée équiprobable comprenant un nombre de valeurs possibles correspondant sensiblement au pouvoir discriminant déterminé de l'identifiant respectif.

3. Procédé selon la revendication 1 ou 2, comprenant en outre la délivrance d'un droit lorsque la comparaison révèle une égalité entre le résultat (H(c'₁)) de l'application de ladite fonction de hachage au deuxième mot du code correcteur d'erreurs et l'identifiant déterminé (H(c₁)).

4. Procédé selon l'une quelconque des revendications précédentes, utilisant en outre un deuxième support de données (11) stockant de façon associée, pour au moins ledit individu (1) de l'ensemble d'individus, la première chaîne numérique (w₁) obtenue à partir d'une donnée biométrique relative audit individu et les identifiants de pouvoirs discriminants déterminés distincts obtenus par application de fonctions de hachage respectives au premier mot (c₁) du code correcteur d'erreurs associé audit individu, le procédé comprenant en outre les étapes suivantes relativement audit individu (1) de l'ensemble d'individus :
- retrouver la première chaîne numérique (w₁) stockée sur le deuxième support de données (11) et correspondant sensiblement à ladite deuxième chaîne numérique (w'₁) ;
- retrouver l'identifiant (H(c₁)) stocké sur le deuxième support de données (11) en association avec la première chaîne numérique (w₁) retrouvée, ayant un pouvoir discriminant correspondant sensiblement au niveau de discrimination souhaité ; et
- comparer le résultat (H(c'₁)) de l'application de la fonction de hachage (H) par application de laquelle l'identifiant retrouvé a été obtenu au deuxième mot (c'₁) du code correcteur d'erreurs avec l'identifiant retrouvé (H(c₁)).

5. Système de vérification biométrique comprenant des moyens (2) pour obtenir une donnée biométrique et des moyens (12-17) de traitement numérique agencés pour mettre en oeuvre le procédé selon l'une quelconque des revendications précédentes.

6. Produit programme d'ordinateur comprenant des instructions de code adaptées à la mise en oeuvre du procédé selon l'une quelconque des revendications 1 à 4, lorsqu'il est chargé et exécuté par des moyens informatiques.

## Patentansprüche

1. Verfahren zur biometrischen Verifizierung, das einen ersten Datenträger (8), der auf zugeordnete Weise für mindestens eine Person (1) aus einer Gruppe von Personen eine Identität (I₁) in Bezug auf die Person speichert, das Ergebnis (w₁⊕c₁) eines Hinzufügens durch die Exklusiv-ODER-Operation eines ersten Wortes (c₁) eines Fehlerkorrekturcodes, der mit der Person verbunden wird, zu einer ersten digitalen Kette (w₁), die ausgehend von einer biometrischen Datenangabe in Bezug auf die Person erhalten wird, und mindestens zwei Identifikatoren verschiedener bestimmter Unterscheidungspotentiale, die durch Anwendung der entsprechenden Hash-Funktionen auf das erste Wort des Fehlerkorrekturcodes erhalten werden, verwendet, wobei das Verfahren die folgenden Schritte in Bezug auf eine Person (1) der Gruppe von Personen aufweist:
- Erhalten einer biometrischen Datenangabe in Bezug auf die Person;
- Umwandeln der biometrischen Datenangabe in eine zweite digitale Kette (w'₁);
- Bestimmen eines zweiten Wortes (c'₁) des Fehlerkorrekturcodes, das im Wesentlichen dem Hinzufügen durch die Exklusiv-ODER-Operation zu der zweiten digitalen Kette (w'₁) des Ergebnisses (w₁⊕c₁) des Hinzufügens durch die Exklusiv-ODER-Operation des ersten Wortes des Fehlerkorrekturcodes zu der ersten digitalen Kette entspricht, die auf dem ersten Datenträger (8) in Verbindung mit der Identität (Iᵢ) in Bezug auf die Person gespeichert wird;
- Bestimmen eines gewünschten Unterscheidungsgrads;
- Bestimmen eines Identifikators (H(c₁)), der auf dem ersten Datenträger in Verbindung mit der Identität in Bezug auf die Person gespeichert wird, der ein Unterscheidungspotential aufweist, das im Wesentlichen dem gewünschten Unterscheidungsgrad entspricht;
- Anwenden der Hash-Funktion auf das zweite Wort (c'₁) des Fehlerkorrekturcodes, durch deren Anwendung der bestimmte Identifikator erhalten wurde; und
- Vergleichen des Ergebnisses (H(c'₁)) der Anwendung der Hash-Funktion auf das zweite Wort des Fehlerkorrekturcodes mit dem bestimmten Identifikator (H(c₁)).

2. Verfahren nach Anspruch 1, wobei mindestens gewisse der Hash-Funktionen, die auf das erste Wort des Fehlerkorrekturcodes angewendet werden, ausgewählt werden, um einen Empfangsraum mit gleicher Wahrscheinlichkeit zu haben, der eine Anzahl von möglichen Werten aufweist, die im Wesentlichen dem bestimmten Unterscheidungspotential des jeweiligen Identifikators entsprechen.

3. Verfahren nach Anspruch 1 oder 2, ferner umfassend das Erteilen einer Berechtigung, wenn das Vergleichen eine Gleichheit zwischen dem Ergebnis (H(c'₁)) der Anwendung der Hash-Funktion auf das zweite Wort des Fehlerkorrekturcodes und dem bestimmten Identifikator (H(c₁)) zeigt.

4. Verfahren nach einem der vorhergehenden Ansprüche, das ferner einen zweiten Datenträger (11), der auf zugeordnete Weise für mindestens die Person (1) aus der Gruppe von Personen die erste digitale Kette (w₁) speichert, die ausgehend von einer biometrischen Datenangabe in Bezug auf die Person erhalten wird, und die Identifikatoren verschiedener bestimmter Unterscheidungspotentiale, die durch Anwendung der entsprechenden Hash-Funktionen auf das erste Wort (c₁) des Fehlerkorrekturcodes, der der Person zugeordnet wird, erhalten werden, verwendet, wobei das Verfahren ferner die folgenden Schritte in Bezug auf die Person (1) der Gruppe von Personen aufweist:
- Finden der ersten digitalen Kette (w₁), die auf dem zweiten Datenträger (11) gespeichert wird und im Wesentlichen der zweiten digitalen Kette (w'₁) entspricht;
- Finden des Identifikators (H(c₁)), der auf dem zweiten Datenträger (11) in Verbindung mit der gefundenen ersten digitalen Kette (w₁) gespeichert wird, der ein Unterscheidungspotential aufweist, das im Wesentlichen dem gewünschten Unterscheidungsgrad entspricht; und
- Vergleichen des Ergebnisses (H(c'₁)) der Anwendung der Hash-Funktion (H), durch deren Anwendung der gefundene Identifikator erhalten wurde, auf das zweite Wort (c'₁) des Fehlerkorrekturcodes mit dem gefundenen Identifikator (H(c₁)).

5. System zur biometrischen Verifizierung, umfassend Mittel (2), um eine biometrische Datenangabe zu erhalten und Mittel (12-17) zur Digitalverarbeitung, die angeordnet sind, um das Verfahren nach einem der vorhergehenden Ansprüche umzusetzen.

6. Computerprogrammprodukt, umfassend Codebefehle, die geeignet sind, das Verfahren nach einem der Ansprüche 1 bis 4 umzusetzen, wenn es installiert und von Informatikmitteln ausgeführt wird.

## Claims

1. A biometric verification method using a first data medium (8) storing in association, for at least one individual (1) of a set of individuals: an identity (I₁) relating to said individual, the result (w₁ ⊕ c₁) of adding, by an exclusive OR operation, a first word (c₁), of an error-correcting code associated with said individual to a first digital string (w₁) obtained from biometric data relating to said individual and at least two identifiers of distinct determined discriminating powers obtained by applying respective hashing functions to the first error-correcting code word; the method comprising the following steps relating to an individual (1) of the set of individuals:
- obtaining biometric data relating to the individual;
- converting the biometric data into a second digital string (w'₁);
- determining a second error-correcting code word (c'₁) corresponding substantially to adding, by an exclusive OR operation, the second digital string (w'₁) to the result (w₁ ⊕ c₁) of adding, by an exclusive OR operation, the first error-correcting code word to the first digital string stored on the first data medium (8) in association with the identity (I₁) relating to said individual;
- determining a desired level of discrimination;
- determining the identifier (H(c₁)) stored on the first data medium in association with the identity relating to said individual, having discriminating power corresponding substantially to the desired level of discrimination;
- applying to the second error-correcting code word (c'₁) the hashing function in application of which said determined identifier was obtained; and
- comparing the result (H(c'₁)) of applying said hashing function to said second error-correcting code word with the determined identifier (H(c₁)).

2. A method according to claim 1, in which at least some of the hashing functions applied to the first error-correcting code word are selected to have an equiprobable arrival space comprising a number of possible values corresponding substantially to the determined discriminating power of the respective identifier.

3. A method according to claim 1, further comprising delivering a right when the comparison finds equality between the result (H(c'₁)) of applying said hashing function to the second error-correcting code word and the determined identifier (H(c₁)).

4. A method according to claim 1, also using a second data medium (11) storing in association, for at least said individual (1) of the set of individuals: the first digital string (w₁) obtained from biometric data relating to said individual and the identifiers of distinct determined discriminating powers obtained by applying respective hashing functions to the first error-correcting code word (c₁) associated with said individual; the method further comprising the following steps relating to said individual of the set of individuals:
- finding the first digital string (w₁) stored on the second data medium (11) and corresponding substantially to said second digital string (w'₁);
- finding the identifier (H(c'₁)) stored on the second data medium (11) in association with the found first digital string (w₁), having discriminating power corresponding substantially to the desired level of discrimination; and
- comparing the result (H(c'₁)) of applying the hashing function (H) in application of which the found identifier was obtained to the second error-correcting code word (c'₁) with the identifier as found (H(c₁)).

5. A biometric verification system comprising means (2) to obtain a biometric data and means digital processing means (12-17) to process the method accord to any of the preceding claims.

6. A computer program product comprising code instructions adapted for processing the method according to any of claims 1 to 4, when loaded and executed by computer means.
